# EUROPEAN PATENT APPLICATION

(11) **EP 2 028 383 A2**
(43) Date of publication of application: **25.02.2009**
(21) Application number: 08162579.0
(22) Date of filing: 19.08.2008
(51) Int. Cl.: F16D 13/64

(54) **Wet friction material**

(30) Priority: 20.08.2007 JP 2007213407
(71) Applicant: AISIN KAKO KABUSHIKI KAISHA, Toyota-shi Aichi-ken 470-0492 (JP)
(72) Inventor: Hiogashijima, Yuko c/o Aisin Kako Kabushiki Kaisha, Toyota-shi Aichi 470-0492 (JP); Suzuki, Masato c/o Aisin Kako Kabushiki Kaisha, Toyota-shi Aichi 470-0492 (JP)
(74) Representative: TBK-Patent

(57) **Abstract**

In a wet friction material, to be able to obtain a more significant drag torque reduction effect certainly by making it easy to discharge a lubricating oil which is supplied from an inner peripheral side of a core metal into an outer peripheral side and by preventing a stirred torque from increasing by generating oil retained at an outer periphery, and moreover to be able to obtain a more significant drag torque reduction effect even in case of a specification that there is no lubricating oil supply from the inner peripheral side.
In a segment-type friction material 1, it promotes ATF to discharge into outside a diameter and enhances a cavitation by giving R processing to an inner periphery and an outer periphery of segment pieces 3A, 3B so as to shorten an oil groove 4A, and yet it can restrain a stirred torque resulting from forming oil retained by ATF caused by that a space in the outer peripheral side is secured by giving R processing to the outer periphery of segment pieces 3A, 3B.

## Description

### BACKGROUND OF THE INVENTION

### FIELD OF THE INVENTION

This invention relates to a wet friction material that generates a torque by applying a high pressure to an opposite surface while being immersed in oil. In detail, this invention relates to a segment-type friction material made by joining friction material substrates that were cut into a segment piece onto one or both surfaces of a core metal of a flat ring shape along an entire circumference thereof with an adhesive. Otherwise, this invention relates to a ring-type friction material made by pressing or cutting one or both surfaces of a friction material of a ring shape that has ring-shaped friction material substrates joined onto one or both surfaces of a core metal of a flat ring shape thereof with an adhesive so as to form a plurality of oil grooves in a radial direction.

### DESCRIPTION OF THE RELATED ART

In recent years, a segment-type friction material has been developed as a wet friction material in order to improve a material yield with resultant cost reduction and to lessen a drag torque with resultant high fuel efficiency in a vehicle. The segment-type friction material is made by that friction material substrates that were cut into a segment piece along the flat ring shape are arranged and joined with an adhesive onto a front surface of the core metal of the flat ring shape side-by-side along the entire circumference of the core metal with a gap to be an oil groove, and similarly another set of the segment-piece-shaped friction material substrates are joined with an adhesive to a rear surface of the core metal also. Such a segment-type friction material is applicable to an automatic transmission which may be referred to as "AT" hereafter of an automobile or the like or a friction material engaging device applied single or plural friction plates, which is used for a transmission of a motorcycle or the like.

As an example, a wet hydraulic clutch is used for an automatic transmission of an automobile or the like. The wet hydraulic clutch has a plurality of segment-type friction materials and a plurality of separator plates laid alternately on each other. Then, both the plates are contacted with a hydraulic pressure to transmit a torque. A lubricating oil (automatic transmission fluid, which may be referred to as "ATF" hereafter) is supplied to between both the plates for the purpose of absorbing a frictional heat generated when they are shifted from a disengaged state to an engaged state or preventing abrasion of a friction material or the like. ("ATF" is a registered trademark of Idemitsu Kosan Co., Ltd.)

However, a distance between the segment-type friction material and the separator plate is set small so as to increase response of the hydraulic clutch. Moreover, a total area of an oil passage provided on the segment-type friction material is restricted so as to assure a sufficient torque transmission capacity when the hydraulic clutch is engaged. As a result, it becomes hard to discharge ATF remaining between the segment-type friction material and the separator plate when the hydraulic clutch is released, and there was a problem that it generated a drag torque by ATF caused by a relative rotation of both the plates.

Therefore, in Japanese Laid Open Patent Publication No. 2001-295859, it is disclosed an invention regarding a wet friction member **characterized in that** division formation is carried out to oil grooves which are formed in between adjacent segment pieces and a distance of the oil grooves makes narrow on the way from an inner peripheral side to an outer peripheral side. Hereby, ATF which runs from the inner peripheral side to the outer peripheral side is kept back at a point where the distance of the oil groove changes and certain ATF overflow and run to a front surface of the segment pieces, therefore it makes to be capable of reducing the drag torque as well as improving a heat resistance by improving a cooling effect of ATF.

Moreover, according to an invention described in Japanese Laid Open Patent Publication No. 2005-069411, two sides which are attached R in a reverse direction of the core metal of the segment piece are joined with an adhesive so as to be an inner periphery and an outer periphery. Therefore, it attaches R which goes up toward a direction of the oil groove to the inner periphery and a width of an outer peripheral opening portion of a gap to be an oil groove is larger than a width of an inner peripheral opening portion of the gap. Thus, it can significantly improve a discharging efficiency of ATF by idle running of the segment-type friction material and it can also substantially reduce the drag torque resulting from ATF.

Furthermore, according to an invention described in Japanese Laid Open Patent Publication No. 2005-282648, there is provided a segment-type friction material that when the segment-type friction material rotates in a disengaged state in case of being assembled into AT by cutting off a corner of the inner peripheral side of the segment piece at a predetermined angle, ATF is positively supplied to a friction surface of friction material substrates by that ATF which is supplied from the inner peripheral side touches a portion where the segment pieces were cut off, therefore it can restrain contact of a separator plate and the friction surface and considerably reduce the drag torque resulting from ATF.

However, in the technique described in the above Japanese Laid Open Patent Publication No.2001-295859, No. 2005-069411 and No. 2005-282648, it cannot be very effective in easily discharging ATF which is supplied from the inner peripheral side of the core metal of the segment-type friction material into the outer peripheral side, and a stirred torque increases by generating oil retained at the outer periphery. Therefore, there is a problem that the drag torque reduction effect is not enough yet, though it is hard to bring a significant high efficiency in a vehicle.

Additionally, in the technique described in the above Japanese Laid Open Patent Publication No.2001-295859, No. 2005-069411 and No. 2005-282648, it is assumed that ATF is supplied from the inner peripheral side of the core metal of the segment-type friction material. In an actual equipment, in case of a specification that there is no ATF supply from a hub hole, there is a problem that it is hardly obtain an effect to reduce the drag torque.

As a result, an object of this invention is to provide a wet friction material that can certainly obtain a more significant drag torque reduction effect by that it prevents the stirred torque from increasing by generating oil retained at the outer periphery as well as making it easy to discharge the lubricating oil which is supplied from the inner peripheral side of the core metal into the outer peripheral side, and moreover it can obtain a more significant drag torque reduction effect even in case of a specification that there is no lubricating oil supply from the inner peripheral side.

### BRIEF SUMMARY OF THE INVENTION

According to a first aspect of the invention, there is provided a segment-type wet friction material made by joining friction material substrates that were cut into a segment piece along the above flat ring shape onto one or both surfaces of the core metal of the flat ring shape along the entire circumference thereof with an adhesive so as to form a plurality of oil grooves in a radial direction by a gap between adjacent segment pieces mentioned above. Otherwise, there is provided a ring-type wet friction material made by pressing or cutting ring-shaped friction material substrates joined onto one or both surfaces of the core metal of the flat ring shape thereof with an adhesive so as to form a plurality of oil grooves in a radial direction, while leaving an island shaped portion. Additionally, in this wet friction material, R processing and/or chamfering processing is given only to an outer periphery or to the outer periphery and an inner periphery of the above island shaped portion or the above segment piece which is bounded by the above plurality of the oil grooves, as a result, in the above plurality of the oil grooves, the length of substantial oil grooves which give a passage when the lubricating oil is discharged is shortened at least every one of the above plurality of the oil grooves.

Here, "length of an oil groove" means the length of a shorter one in end sections of adjacent ones of segment pieces or end sections of adjacent ones of island shaped portions.

According to a second aspect of the invention, there is provided a wet friction material that in the above plurality of the oil grooves, the length of the substantial oil grooves which give a passage when the lubricating oil is discharged is less than or equal to two-thirds of a maximum radial length of the above segment piece or the above island shaped portion at least every one of the above plurality of the oil grooves, while all of the above plurality of the oil grooves are symmetrical shapes in composition of claim 1.

According to a third aspect of the invention, there is provided a wet friction material that all the length of the above plurality of the oil grooves is less than or equal to two-thirds of the maximum radial length of the above segment piece or the above island shaped portion, while all of the above plurality of the oil grooves are symmetrical shapes in composition of claim 1.

According to a fourth aspect if the invention, there is provided a wet friction material that R processing and/or chamfering processing is given only to the outer periphery or to the outer periphery and the inner periphery of the above island shaped portion or the above segment piece which is bounded by the above plurality of the oil grooves asymmetrically in composition of claim 1, as a result, shapes of the above segment pieces or the above island shaped portions become all the same and all the length of the above plurality of the oil grooves is less than or equal to two-thirds of the maximum radial length of the above segment piece or the above island shaped portion, while all of the above oil grooves are asymmetrical shapes.

According to a fifth aspect of the invention, there is provided a wet friction material that the length of shortened oil grooves mentioned above is within a range of 40 % to 67% of the maximum radial length of the above segment piece or the above island shaped portion in one of compositions of claim 1 to claim 4.

According to a sixth aspect of the invention, there is provided a wet friction material that a dent in an inner peripheral side is applied to an inner peripheral center portion of the above island shaped portion or the above segment piece which is bounded by the above plurality of the oil grooves in one of compositions of claim 1 to claim 5.

According to the first aspect of the invention, there is provided a segment-type wet friction material made by joining friction material substrates that were cut into a segment piece along the flat ring shape onto one or both surfaces of the core metal of the flat ring shape along the entire circumference thereof with an adhesive so as to form a plurality of oil grooves in the radial direction by a gap between adjacent segment pieces. Otherwise, there is provided a ring-type wet friction material made by pressing or cutting ring-shaped friction material substrates joined onto one or both surfaces of the core metal of the flat ring shape thereof with an adhesive so as to form a plurality of oil grooves in the radial direction, while leaving the island shaped portion. Additionally, in this wet friction material, R processing and/or chamfering processing is given only to the outer periphery or to the outer periphery and the inner periphery of the island shaped portion or the segment piece which is bounded by the plurality of the oil grooves, as a result, the length of substantial oil grooves which give a passage when the lubricating oil is discharged is shortened at least every one of the plurality of the oil grooves.

Here, "R processing and/or chamfering processing is given to the outer periphery and the inner periphery" means including all cases as follows. A case that R processing is given to both the outer periphery and the inner periphery, a case that chamfering processing is given to both the outer periphery and the inner periphery, a case that R processing and chamfering processing are given to both the outer periphery and the inner periphery, a case that R processing or chamfering processing is given to the outer periphery and R processing and chamfering processing are given to the inner periphery and a case that R processing and chamfering processing are given to the outer periphery and R processing or chamfering processing is given to the inner periphery. Additionally, "length of an oil groove" means the length of a shorter one in end sections of adjacent ones of segment pieces or end sections of adjacent ones of island shaped portions.

That is, according the invention described in the above Japanese Laid Open Patent Publication No. 2005-282648, the corner of the inner peripheral side of the segment piece is cut off at the predetermined angle, therefore, the end section of a side where the corner of the inner peripheral side was cut off shortens. However, this portion is working so as to supply ATF positively to the friction surface of friction material substrates as mentioned above and it is nearly-defunct as a passage when ATF is discharged.

In contrast, according to the first aspect of the invention, there is provided a wet friction material that the length of substantial oil grooves which give a passage when the lubricating oil is discharged is shortened at least every one of a plurality of oil grooves, therefore, it becomes easy for the lubricating oil to run from the inner periphery to the outer periphery or from the outer periphery to the inner periphery in this short oil groove. Also, R processing and/or chamfering processing is given only to the outer periphery or to the outer periphery and the inner periphery, therefore, both the lubricating oil which is supplied from the inner peripheral side and the lubricating oil which is supplied from the outer peripheral side are kept back at an extending portion where it was given R processing or chamfering processing, and it becomes easy for the lubricating oil to run over the front surface of the segment piece or the island shaped portion. Moreover, R processing and/or chamfering processing is given to the outer periphery, therefore, a space for the lubricating oil to run through the outer periphery of the wet friction material is sufficiently secured.

In such compositions, when the wet friction material rotates in either direction in a disengagement state, the lubricating oil which is supplied from the inner peripheral side of the wet friction material can be promptly discharged into the outer peripheral side through the short oil groove, therefore, a cavitation is improved. And yet, it can obtain a significant drag torque reduction effect by a peeling effect that the lubricating oil runs from the portion where R processing or chamfering processing is given to the inner peripheral side to the front surface of the segment piece or the island shaped portion and goes into between the friction material and a counterpart material. Moreover, the space for the lubricating oil to run through the outer periphery is sufficiently secured, therefore, it can certainly prevent the drag torque from increasing by generating oil retained at the outer periphery, which is caused by the lubricating oil which was discharged to the outer peripheral side.

Moreover, in case of the specification that there is no lubricating oil supply from the inner peripheral side, the lubricating oil which is supplied from the outer peripheral side of the wet friction material is promptly discharged to the inner peripheral side through the short oil groove. And yet, it can obtain a significant drag torque reduction effect by a peeling effect that the lubricating oil runs from the portion where R processing or chamfering processing is given to the outer peripheral side to the front surface of the segment piece or the island shaped portion and goes into between the friction material and a counterpart material. Moreover, the space for the lubricating oil to run through the outer periphery is sufficiently secured, therefore, it can certainly prevent the drag torque from increasing by generating oil retained at the outer periphery, which is caused by the lubricating oil which is supplied from the outer peripheral side.

Accordingly, there is provided a wet friction that it can certainly obtain a more significant drag torque reduction effect by making it easy to discharge the lubricating oil which is supplied from the inner peripheral side of the core metal into the outer peripheral side and by preventing the stirred torque from increasing, which is caused by generating oil retained at the outer periphery. And moreover, it can obtain a more significant drag torque reduction effect even in case of the specification that there is no lubricating oil supply from the inner peripheral side.

According to the second aspect of the invention, there is provided a wet friction material that in a plurality of oil grooves, the length of substantial oil grooves which give a passage when the lubricating oil is discharged is less than or equal to two-thirds of the maximum radial length of the segment piece or the island shaped portion at least every one of the plurality of the oil grooves, while all of the plurality of the oil grooves are symmetrical shapes.

Therefore, in addition to advantages recited in claim 1, it can obtain an advantageous effect that it enables to obtain an equivalent drag torque reduction effect even in case the wet friction material rotates in either direction. Also, in oil grooves, the length of substantial oil grooves which give a passage when the lubricating oil is discharged is less than or equal to two-thirds of the maximum radial length of the segment piece or the island shaped portion at least every one of the plurality of the oil grooves, therefore, it can certainly discharge the lubricating oil which is supplied from the inner (outer) peripheral side of the wet friction material into the outer (inner) peripheral side promptly.

Accordingly, there is provided a wet friction that it can certainly obtain a more significant drag torque reduction effect by making it easy to discharge the lubricating oil which is supplied from the inner peripheral side of the core metal into the outer peripheral side and by preventing the stirred torque from increasing, which is caused by generating oil retained at the outer periphery. And moreover, it can obtain a more significant drag torque reduction effect even in case of the specification that there is no lubricating oil supply from the inner peripheral side.

According to the third aspect of the invention, there is provided a wet friction material that all the length of a plurality of oil grooves is less than or equal to two-thirds of the maximum radial length of the segment piece or the island shaped portion, while all of the plurality of the oil grooves are symmetrical shapes.

Therefore, in addition to the advantages recited in claim 1, it can obtain an advantageous effect that it enables to obtain an equivalent drag torque reduction effect even in case the wet friction material rotates in either direction. Also, all the length of a plurality of oil grooves is less than or equal to two-thirds of the maximum radial length of the segment piece or the island shaped portion, therefore, it can more certainly discharge the lubricating oil which is supplied from the inner (outer) peripheral side of the wet friction material to the outer (inner) peripheral side promptly.

Accordingly, there is provided a wet friction that it can obtain a more significant drag torque reduction effect more certainly by making it easy to discharge the lubricating oil which is supplied from the inner peripheral side of the core metal into the outer peripheral side and by preventing the stirred torque from increasing, which is caused by generating oil retained at the outer periphery. And moreover, it can obtain a more significant drag torque reduction effect even in case of the specification that there is no lubricating oil supply from the inner peripheral side.

According to the forth aspect of the invention, there is provided a wet friction material that R processing and/or chamfering processing is given only to the outer periphery or to the outer periphery and the inner periphery of the island shaped portion or the segment piece which is bounded by a plurality of oil grooves asymmetrically, as a result, shapes of the segment pieces or the island shaped portions become all the same. All the length of the plurality of the oil grooves is less than or equal to two-thirds of the maximum radial length of the segment piece or the island shaped portion, while all of the plurality of the oil grooves are asymmetrical shapes.

Therefore, in addition to the advantages recited in claim 1, it can obtain an advantageous effect that it enables to more certainly discharge the lubricating oil which is supplied from the inner (outer) peripheral side of the wet friction material into the outer (inner) peripheral side promptly because all the length of a plurality of oil grooves is less than or equal to two-thirds of the maximum radial length of the segment piece or the island shaped portion.

Accordingly, there is provided a wet friction that it can obtain a more significant drag torque reduction effect more certainly by making it easy to discharge the lubricating oil which is supplied from the inner peripheral side of the core metal to the outer peripheral side and by preventing the stirred torque from increasing, which is caused by generating oil retained at the outer periphery. And moreover, it can obtain a more significant drag torque reduction effect even in case of the specification that there is no lubricating oil supply from the inner peripheral side.

According to the fifth aspect of the invention, there is provided a wet friction material that the length of shortened oil grooves is within a range of 40 % to 67 %, more preferably within a range of 50 % to 56%, of the maximum radial length of the segment piece or the island shaped portion.

As a result of an accomplishment of keen and hard experimental study by this inventors, they have finally found that it requires that the length of shortened oil grooves is within a range of 40 % to 67 % of the maximum radial length of the segment piece or the island shaped portion so as to obtain the drag torque reduction effect more effectively in the wet friction material. Then, they have completed this invention on the basis of above their knowledge.

More specifically, when the length of oil grooves is more than 67 % of the maximum radial length of the segment piece or the island shaped portion, there is a possibility that it can not obtain a sufficient drag torque reduction effect because the oil grooves are too long. In contrast, when the length of oil grooves is less than 40 % of the maximum radial length of the segment piece or the island shaped portion, a dimension of the segment piece or the island shaped portion decreases also as the length of oil grooves shortens, therefore, there is a possibility that it can not obtain a sufficient drag torque transmission effect. Accordingly, it is preferable that the length of oil grooves is within a range of 40 % to 67 % of the maximum radial length of the segment piece or the island shaped portion.

Furthermore, it is more preferable when the length of oil grooves is within a range of 50 % to 56 % of the maximum radial length of the segment piece or the island shaped portion because the dimension of the segment piece or the island shaped portion is secured enough to obtain a sufficient drag torque transmission effect, and yet the length of oil grooves is short enough to obtain a sufficient drag torque reduction effect more certainly.

Accordingly, there is provided a wet friction material that it can obtain a more significant drag torque reduction effect more certainly by making it easy to discharge the lubricating oil which is supplied from the inner peripheral side of the core metal into the outer peripheral side and by preventing the stirred torque from increasing, which is caused by generating oil retained at the outer periphery. And moreover, it can obtain a more significant drag torque reduction effect even in case of the specification that there is no lubricating oil supply from the inner peripheral side.

According to the sixth aspect of the invention, there is provided a wet friction material that the dent in the inner peripheral side is applied to the inner peripheral center portion of the island shaped portion or the segment piece which is bounded by a plurality of oil grooves.

Therefore, in addition to the advantages recited in claim 1 to claim 5, it can obtain an advantageous effect that when the lubricating oil is supplied from the inner peripheral side, in the dent in the inner peripheral side, which is applied to the inner peripheral center portion, it enables to obtain a more significant drag torque reduction effect by greatly increasing a peeling effect that the lubricating oil runs over the front surface of the segment piece or the island shaped portion and goes into between the friction material and a counterpart material.

Accordingly, there is provided a wet friction material that it can obtain a more significant drag torque reduction effect more certainly by making it easy to discharge the lubricating oil which is supplied from the inner peripheral side of the core metal into the outer peripheral side and by preventing the stirred torque from increasing, which is caused by generating oil retained at the outer periphery. And moreover, it can obtain a more significant drag torque reduction effect even in case of the specification that there is no lubricating oil supply from the inner peripheral side.

### BRIEF DESCRIPTION OF THE SEVERAL VIEWS OF THE DRAWING

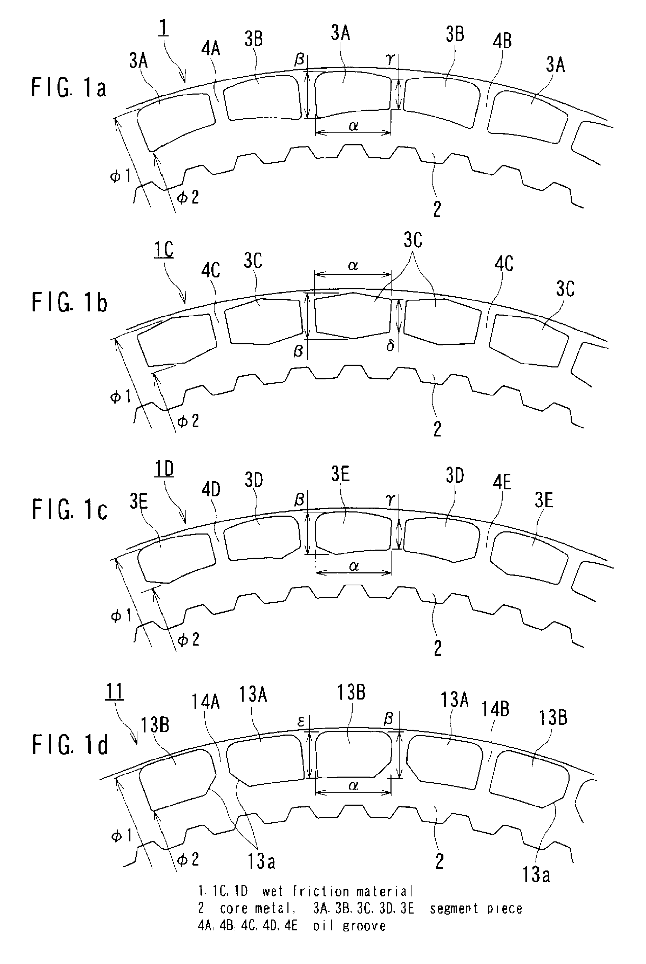

Fig.1a is a plan view showing a part of a wet friction material (first example) according to a first embodiment of the invention. Fig.1b is a plan view showing a part of a wet friction material (second example) according to a first modified example of the first embodiment of the invention. Fig.1c is a plan view showing a part of a wet friction material (third example) according to a second modified example of the first embodiment of the invention. Fig.1d is a plan view showing a part of a wet friction material (comparative example) according to a conventional art.

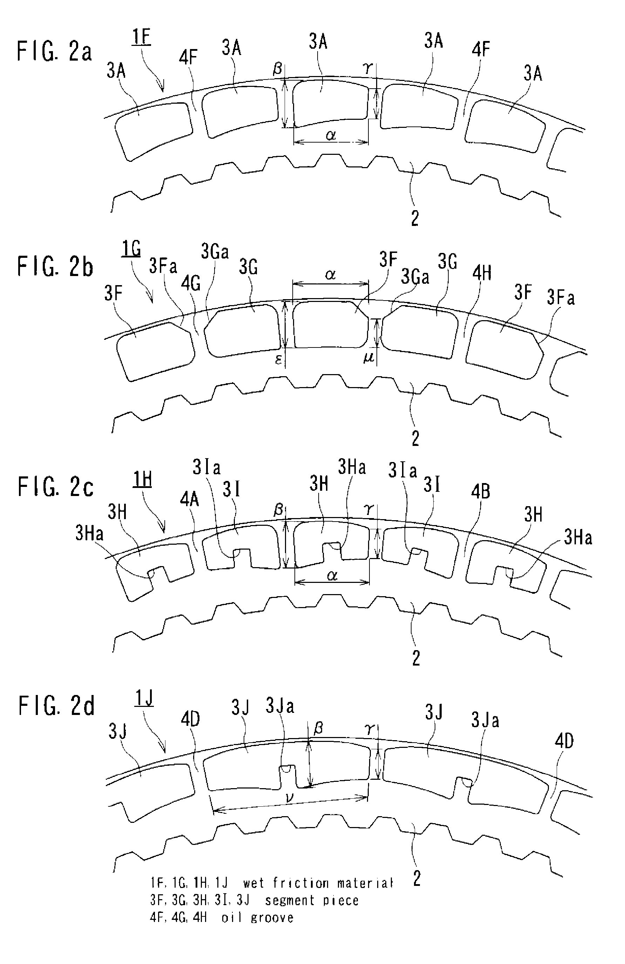

Fig.2a is a plan view showing a part of a wet friction material according to a third modified example of the first embodiment of the invention. Fig.2b is a plan view showing a part of a wet friction material according to a forth modified example of the first embodiment of the invention. Fig.2c is a plan view showing a part of a wet friction material according to a fifth modified example of the first embodiment of the invention. Fig.2d is a plan view showing a part of a wet friction material according to a sixth modified example of the first embodiment of the invention.

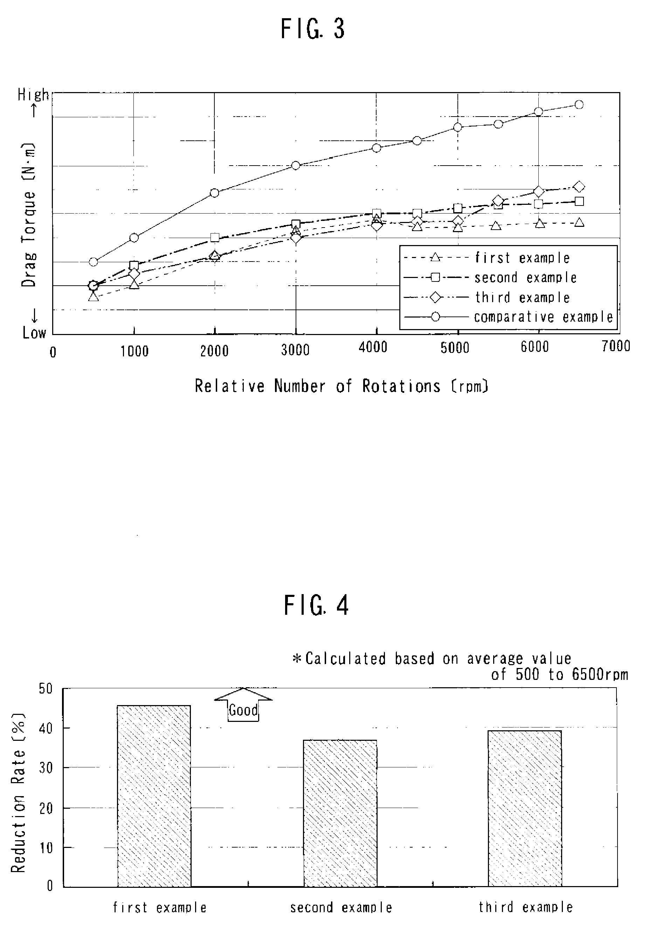

Fig.3 is a graph showing a relation between a relative rotating speed and a drag torque in the wet friction material (the first to third example), while compared with the conventional wet friction material (comparative example).

Fig.4 is a bar graph showing a drag torque reduction effect in the wet friction material (the first to third example) as a reduction rate compared with the conventional wet friction material (comparative example).

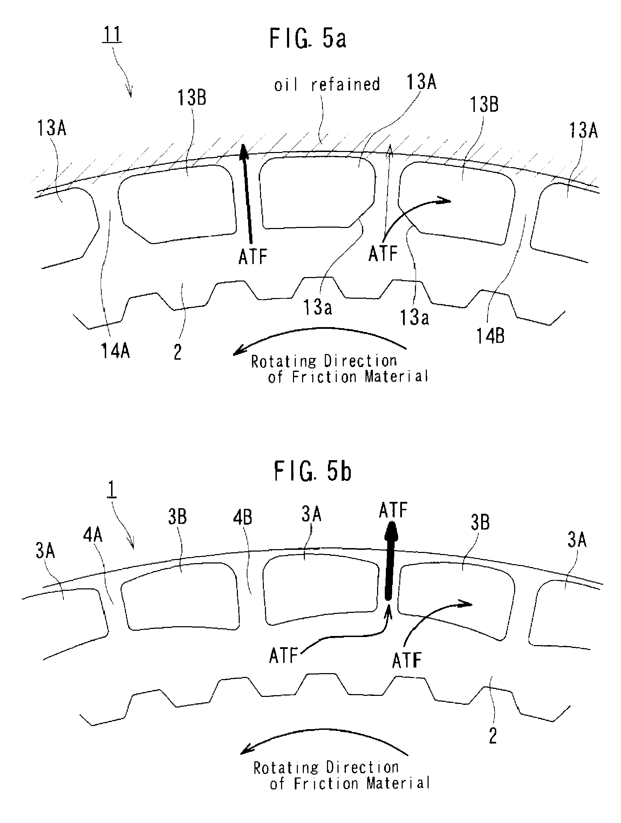

Fig.5a is an explanatory drawing showing a drag torque reduction effect in the conventional wet friction material (comparative example). Fig.5b is an explanatory drawing showing a drag torque reduction effect of the wet friction material (first example) according to the first embodiment of the invention.

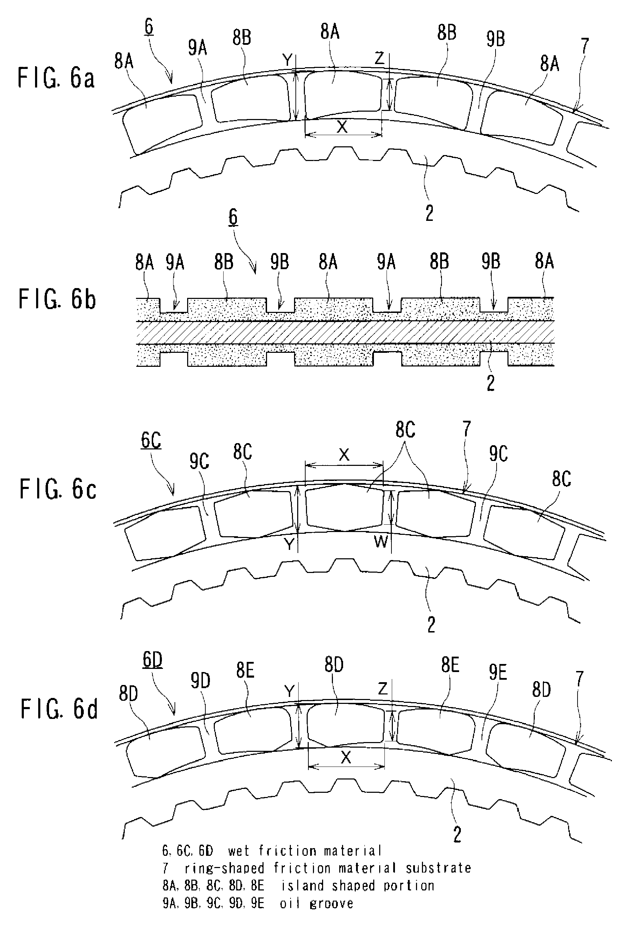

Fig.6a is a plan view showing a part of a wet friction material according to a second embodiment of the invention. Fig.6b is a partial sectional view showing a vertical sectional of the wet friction material according to the second embodiment of the invention. Fig.6c is a plan view showing a part of a wet friction material according to a first modified example of the second embodiment of the invention. Fig.6d is a plan view showing a part of a wet friction material according to a second modified example of the second embodiment of the invention.

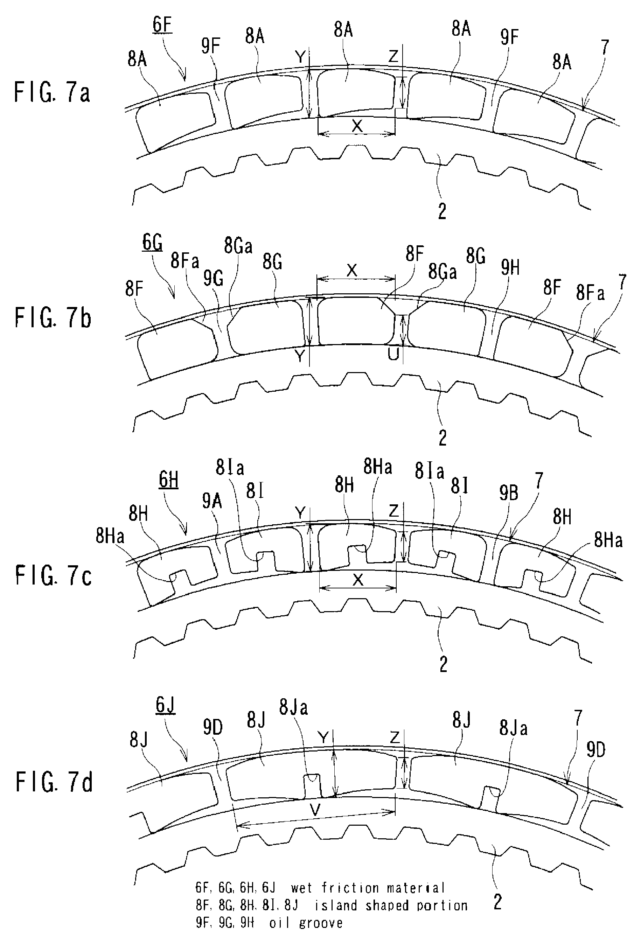

Fig.7a is a plan view showing a part of a wet friction material according to a third modified example of the second embodiment of the invention. Fig.7b is a plan view showing a part of a wet friction material according to a forth modified example of the second embodiment of the invention. Fig.7c is a plan view showing a part of a wet friction material according to a fifth modified example of the second embodiment of the invention. Fig.7d is a plan view showing a part of a wet friction material according to a sixth modified example of the second embodiment of the invention.

### DETAILED DESCRIPTION OF THE INVENTION

Preferred embodiments of the invention are described hereinafter referring to drawings. Besides, regarding points starting from a second embodiment, the same mark and the same sign as a first embodiment mean the same or equivalent function part to the first embodiment and the same mark and the same sign of the mutual embodiment are the common function part to those embodiments, therefore the overlapped detail explanation is to be omitted here.

### FIRST EMBODIMENT

First, a wet friction material according to a first embodiment of the invention is described referring to Fig.1 to Fig.5.

Fig.1a is a plan view showing a part of a wet friction material (first example) according to a first embodiment of the invention. Fig.1b is a plan view showing a part of a wet friction material (second example) according to a first modified example of the first embodiment of the invention. Fig.1c is a plan view showing a part of a wet friction material (third example) according to a second modified example of the first embodiment of the invention. Fig.1d is a plan view showing a part of a wet friction material (comparative example) according to a conventional art.

Fig.2a is a plan view showing a part of a wet friction material according to a third modified example of the first embodiment of the invention. Fig.2b is a plan view showing a part of a wet friction material according to a forth modified example of the first embodiment of the invention. Fig.2c is a plan view showing a part of a wet friction material according to a fifth modified example of the first embodiment of the invention. Fig.2d is a plan view showing a part of a wet friction material according to a sixth modified example of the first embodiment of the invention.

Fig.3 is a graph showing a relation between a relative rotating speed and a drag torque in the wet friction material (the first to third example) according to the first embodiment of the invention, while compared with the conventional wet friction material (comparative example). Fig.4 is a bar graph showing a drag torque reduction effect in the wet friction material (the first to third example) according to the first embodiment of the invention as a reduction rate compared with the conventional wet friction material (comparative example). Fig.5a is an explanatory drawing showing a drag torque reduction effect in the conventional wet friction material (comparative example). Fig.5b is an explanatory drawing showing a drag torque reduction effect in the wet friction material (first example) according to the first embodiment of the invention.

As shown in Fig.1a, a segment-type friction material 1 as a wet friction material (first example) according to the first embodiment of the invention is made by that a plurality of segment pieces 3A, 3B that normal friction material substrates for a wet friction material use are cut off are arranged side-by-side on a front surface of a steel core metal 2 of a flat ring shape at intervals for oil grooves 4A, 4B and joined it with an adhesive (thermosetting resin) in total forty, and similarly a rear side of the core metal 2 is also joined with an adhesive.

At this point, R processing which is convex to an outer peripheral side is given to an outer periphery of the segment piece 3A and R processing which is concave to an inner peripheral side is given to an inner periphery of the segment piece 3A. A height (radial width of the segment-type friction material 1) shortens as it goes to a right side of the segment piece 3A. On the other hand, R processing which is convex to the outer peripheral side is also given to an outer periphery of the segment piece 3B and R processing which is concave to the inner peripheral side is also given to an inner periphery of the segment piece 3B. The height (radial width of the segment-type friction material 1) shortens as it goes to a left side of the segment piece 3B.

As a result, the oil groove 4A which is formed in between a right edge of the segment piece 3A and a left edge of the segment piece 3B has a short length, while compared with the oil groove4B which is formed in between a left edge of the segment piece 3A and a right edge of the segment piece 3B. A length α of segment pieces 3A, 3B (circumferential width) is 11 mm. A height β of segment pieces 3A, 3B (maximum radial length) is 9 mm. A length γ of the oil groove 4A is 5 mm. Therefore, the length γ of the oil groove 4A is 55.6 % of the maximum radial length of segment pieces 3A, 3B. In addition, each width of oil grooves 4A, 4B is 2 mm.

That is, in the segment-type friction material 1 as a wet friction material according to the first embodiment of the invention, R processing is given to the outer periphery and the inner periphery of segment pieces 3A, 3B which are bounded by a plurality of oil grooves 4A, 4B, as a result, the length of the plurality of the oil grooves 4A, 4B shortens alternately. The length of the oil grooves 4A is less than or equal to two-thirds of the maximum radial length of segment pieces 3A, 3B alternately, while all of the plurality of the oil grooves 4A, 4B are symmetrical shapes. Therefore, the segment-type friction material 1 according to the first embodiment of the invention corresponds with a wet friction material according to an invention of claim 1 and claim 2.

Moreover, in the segment-type friction material 1 according to the first embodiment of the invention, the length of shortened oil grooves 4A is within a range of 40 % to 67 % of the maximum radial length of segment pieces 3A, 3B. Therefore, the segment-type friction material 1 according to the first embodiment of the invention also corresponds with the wet friction material according to an invention of claim 5.

Also, as shown in Fig.1b, a segment-type friction material 1C as a wet friction material (second example) according to the first modified example of the first embodiment of the invention is made by that a plurality of segment pieces 3C that normal friction material substrates for a wet friction material use are cut off are arranged side-by-side on the front surface of the steel core metal 2 of the flat ring shape at an interval for an oil groove 4C and joined it with an adhesive (thermosetting resin) in total forty, and similarly the rear side of the core metal 2 is also joined with an adhesive.

At this point, chamfering processing which is convex to an outer peripheral side, and yet which is symmetrical centering on an outer peripheral center portion, is given to an outer periphery of the segment piece 3C. Also, chamfering processing which is convex to an inner peripheral side, and yet which is symmetrical centering on an inner peripheral center portion, is given to an inner periphery of the segment piece 3C. A height (radial width of the segment-type friction material 1C) shortens as it goes to both sides of the segment piece 3C.

As a result, the oil groove 4C which is formed in between ones of segment pieces 3C has a short length. A length α (circumferential width) of the segment piece 3C is 11 mm. A height β (maximum radical width) of the segment piece 3C is 9 mm. A length δ of the oil groove 4C is 6 mm. Therefore, the length δ of the oil groove 4C is 66.7 % of the maximum radial length of the segment piece 3C. In addition, a width of the oil groove 4C is 2 mm.

That is, in the segment-type friction material 1C as a wet friction material according to the first modified example of the first embodiment of the invention, chamfering processing is given to the outer periphery and the inner periphery of the segment piece 3C which is bounded by a plurality of oil grooves 4C, as a result, all the length of the plurality of the oil grooves 4C shortens. The length of the oil grooves 4C is less than or equal to two-thirds of the maximum radial length of the segment piece 3C, while all of the plurality of the oil grooves 4C are symmetrical shapes. Therefore, the segment-type friction material 1C according to the first modified example of the first embodiment of the invention corresponds with a wet friction material according to an invention of claim 1 and claim 3.

Moreover, in the segment-type friction material 1C as a wet friction material according to the first modified example of the first embodiment of the invention, the length of shortened oil grooves 4C is within a range of 40 % to 67 % of the maximum radial length of the segment piece 3C. Therefore, the segment-type friction material 1C according to the first modified example of the first embodiment of the invention also corresponds with the wet friction material according to an invention of claim 5.

Furthermore, as shown in Fig.1c, a segment-type friction material 1D as a wet friction material (third example) according to the second modified example of the first embodiment of the invention is made by that a plurality of segment pieces 3D, 3E that normal friction material substrates for a wet friction material use are cut off are arranged side-by-side on the front surface of the steel core metal 2 of the flat ring shape at intervals for oil grooves 3D, 3E and joined it with an adhesive (thermosetting resin) in total forty, and similarly the rear side of the core metal 2 is also joined with an adhesive.

At this point, R processing which is convex to the outer peripheral side is given to an outer periphery of the segment piece 3D and R processing which is concave to the inner peripheral side is given to an inner periphery of the segment piece 3D. Moreover, chamfering processing is given to an inner peripheral right corner portion of the segment piece 3D. A height (radial width of the segment-type friction material 1D) shortens as it goes to a left side of the segment piece 3D. On the other hand, R processing which is convex to the outer peripheral side is also given to an outer periphery of the segment piece 3E and R processing which is concave to the inner peripheral side is also given to an inner periphery of the segment piece 3E. And moreover, chamfering processing is given to an inner peripheral left corner portion of the segment piece 3E. The height shortens as it goes to a right side of the segment piece 3E.

As a result, the oil groove 4D which is formed in between a left edge of the segment piece 3D and a right edge of the segment piece 3E has a short length, while compared with the oil groove 4E which is formed in between a right edge of the segment piece 3D and a left edge of the segment piece 3E. A length α of segment pieces 3D, 3E (circumferential width) is 11 mm. A height β of segment pieces 3D, 3E (maximum radial length) is 9 mm. A length γ of the oil groove 4D is 5 mm. Therefore, the length γ of the oil groove 4D is 55.6 % of the maximum radial length of segment pieces 3D, 3E. In addition, each width of oil grooves 4D, 4E is 2 mm.

That is, in the segment-type friction material 1D as a wet friction material according to the second modified example of the first embodiment of the invention, R processing and chamfering processing are given to the outer periphery and the inner periphery of segment pieces 3D, 3E which are bounded by a plurality of oil grooves 4D, 4E, as a result, the length of the plurality of the oil grooves 4D, 4E shortens alternately. The length of the oil grooves 4D is less than or equal to two-thirds of the maximum radial length of segment pieces 3D, 3E alternately, while all of the plurality of the oil grooves 4D, 4E are symmetrical shapes. Therefore, the segment-type friction material 1D according to the second modified example of the first embodiment of the invention corresponds with the wet friction material according to an invention of claim 1 and claim 2.

Moreover, in the segment-type friction material 1D as a wet friction material according to the second modified example of the first embodiment of the invention, the length of shortened oil grooves 4D is within a range of 40 % to 67 % of the maximum radial length of segment pieces 3D, 3E. Therefore, the segment-type friction material 1D according to the second modified example of the first embodiment of the invention also corresponds with the wet friction material according to an invention of claim 5.

In contrast, as shown in Fig.1d, a segment-type friction material 11 as a wet friction material according to the conventional wet friction material (comparative example) is made by that a plurality of segment pieces 13A, 13B that normal friction material substrates for a wet friction material use are cut off are arranged side-by-side on the front surface of the steel core metal 2 of the flat ring shape at intervals for oil grooves 14A, 14B and joined it with an adhesive (thermosetting resin) in total forty, and similarly the rear side of the core metal 2 is also joined with an adhesive.

Also, small R processing is given to right and left corner portions of an outer periphery of the segment piece 13A and chamfering processing 13a is given to an inner peripheral left corner portion of the segment piece 13A. Symmetrically to this, small R processing is given to right and left corner portions of an outer periphery of the segment piece 13B and the chamfering processing 13a is given to an inner peripheral right corner portion of the segment piece 13B. This segment-type friction material 11 corresponds with an example of the segment-type friction material according to an invention of the above Japanese Laid Open Patent publication No. 2005-282648.

At this point, the oil groove 14A can hardly be a passage when ATF is discharged into the outer peripheral side because ATF which is supplied from the inner peripheral side touches a portion where the chamfering processing 13a is given to an inner peripheral opening portion and runs over front surfaces of segment pieces 13A, 13B. Therefore, the oil groove 14B can be a substantial oil groove in the segment-type friction material 11 according to the conventional art.

Hereby, a length α (circumferential width) of segment pieces 13A, 13B is 11 mm. A height β (maximum radial width) of segment pieces 13A, 13B is 9 mm. A length ε of the oil groove 14B, which is equal to β is 9 mm. Therefore, the length ε of the oil groove 14B is 100 % of the maximum radial length of segment pieces 13A, 13B.

Additionally, as shown in Fig.2a, a segment-type friction material 1F as a wet friction material according to the third modified example of the first embodiment of the invention is made by that a plurality of segment pieces 3A that normal friction material substrates for a wet friction material use are cut off are arranged in one direction side-by-side on the front surface of the steel core metal 2 of the flat ring shape at an interval for an oil groove 4F and joined it with an adhesive (thermosetting resin) in total forty, and similarly the rear side of the core metal 2 is also joined with an adhesive.

As described above, R processing which is convex to the outer peripheral side is given to the outer periphery of the segment piece 3A and R processing which is concave to the inner peripheral side is given to the inner periphery of the segment piece 3A. The height (radial width of the segment-type friction material 1) shortens as it goes to the right side of the segment piece 3A. Here, "length of an oil groove" means the length of a shorter one in end sections of adjacent segment pieces, therefore, a length γ of the oil groove 4F is 55.6 % of the maximum radial length of the segment piece 3A. In addition, a width of the oil groove 4F is 2 mm.

Hereby, the length α (circumferential width) of the segment piece 3A is 11 mm. The height β (maximum radial width) of the segment piece 3A is 9 mm. The length γ of the oil groove 4F is 5 mm. Therefore, the length γ of the oil groove 4F is 55.6 % of the maximum radial length of the segment piece 3A. In addition, a width of the oil groove 4F is 2 mm.

That is, in the segment-type friction material 1F as a wet friction material according to the third modified example of the first embodiment of the invention, R processing and chamfering processing are given to the outer periphery and the inner periphery of the segment piece 3A which is bounded by a plurality of oil grooves 4F, as a result, shapes of the segment pieces 3A become all the same. All the length of the plurality of the oil grooves 4F is less than or equal to two-thirds of the maximum radial length β of the segment piece 3A, while all of the plurality of the oil grooves 4F are asymmetrical shapes. Therefore, the segment-type friction material 1F according to the third modified example of the first embodiment of the invention corresponds with a wet friction material according to an invention of claim 1 and claim 4.

Moreover, in the segment-type friction material 1F according to the third modified example of the first embodiment of the invention, the length of short oil grooves 4F is within a range of 40 % to 67 % of the maximum radial length of the segment piece 3A. Therefore, the segment-type friction material 1F according to the third modified example of the first embodiment of the invention also corresponds with the wet friction material according to an invention of claim 5.

Also, as shown in Fig.2b, a segment-type friction material 1G as a wet friction material according to the forth modified example of the first embodiment of the invention is made by that a plurality of segment pieces 3F, 3G that normal friction material substrates for a wet friction material use are cut off are arranged side-by-side on the front surface of the steel core metal 2 of the flat ring shape at intervals for oil grooves 4G, 4H and joined it with an adhesive (thermosetting resin) in total forty, and similarly the rear side of the core metal 2 is also joined with an adhesive.

Additionally, small R processing is given to right and left corner portions of an inner periphery of the segment piece 3F and chamfering processing 3Fa is given to an outer peripheral right corner portion of the segment piece 3F. Symmetrically to this, small R processing is given to right and left corner portions of an inner periphery of the segment piece 3G and chamfering processing 3Ga is given to an outer peripheral left corner portion of the segment piece 3G.

As a result, the oil groove 4G which is formed in between the segment piece 3F and the segment piece 3G has a short length. On the other hand, the oil groove 4H which is formed in between the segment piece 3G and the segment piece 3F has an almost same length, while compared with a height of segment pieces 3G, 3H. A length α of segment pieces 3G, 3H (circumferential width) is 11 mm. A height β (maximum radial width) of segment pieces 3F, 3G is 9 mm. A length µ of the oil groove 4G is 6 mm. Therefore, the length µ of the oil groove 4G is 66.7 % of the maximum radial length β of segment pieces 3F, 3G. In addition, each width of oil grooves 4G, 4H is 2 mm.

That is, in the segment-type friction material 1G as a wet friction material according to the forth modified example of the first embodiment of the invention, chamfering processing is given to one of the outer periphery of segment pieces 3F, 3G which are bounded by a plurality of oil grooves 4G, 4H, as a result, the length of the plurality of the oil grooves (4G, 4H) shortens alternately. The length of the oil grooves 4G is less than or equal to two-thirds of the maximum radial length of segment pieces 3F, 3G alternately, while all of the plurality of the oil grooves 4G, 4H are symmetrical shapes. Therefore, the segment-type friction material 1G according to the forth modified example of the first embodiment of the invention corresponds with the wet friction material according to an invention of claim 1 and claim 2.

Moreover, in the segment-type friction material 1G according to the forth modified example of the first embodiment of the invention, the length of shortened oil grooves 4G is within a range of 40 % to 67 % of the maximum radial length of segment pieces 3F, 3G. Therefore, the segment-type friction material 1F according to the third modified example of the first embodiment of the invention also corresponds with the wet friction material according to an invention of claim 5.

Also, as shown in Fig.2c, a segment-type friction material 1H as a wet friction material according to the fifth modified example of the first embodiment of the invention is made by that a plurality of segment pieces 3H, 3I that normal friction material substrates for a wet friction material use are cut off are arranged side-by-side on the front surface of the steel core metal 2 of the flat ring shape at intervals for oil grooves 4A, 4B and joined it with an adhesive (thermosetting resin) in total forty, and similarly the rear side of the core metal 2 is also joined with an adhesive.

At this point, R processing which is convex to the outer peripheral side is given to an outer periphery of the segment piece 3H and R processing which is concave to the inner peripheral side is given to an inner periphery of the segment piece 3H. A height (radial width) shortens as it goes to a right side of the segment piece 3H. On the other hand, R processing which is convex to the outer peripheral side is also given to an outer periphery of the segment piece 3I and R processing which is concave to the inner peripheral side is also given to an inner periphery of the segment piece 31. The height (radial width) shortens as it goes to a left side of the segment piece 31. Moreover, as shown in Fig.2c, dents 3Ha, 3Ia in an inner peripheral side are given to inner peripheral center portions of segment pieces 3H, 31.

As a result, the oil groove 4A which is formed in between a right edge of the segment piece 3H and a left edge of the segment piece 31 has a short length, while compared with the oil groove 4B which is formed in between a left edge of the segment piece 3H and a right edge of the segment piece 31. A length α of segment pieces 3H, 31 (circumferential width) is 11 mm. A height β (maximum radial width) of segment pieces 3H, 31 is 9 mm. The length γ of the oil groove 4A is 5 mm. Therefore, the length γ of the oil groove 4A is 55.6 % of the maximum radial length β of segment pieces 3H, 31. In addition, each width of oil grooves 4A, 4B is 2 mm.

That is, in the segment-type friction material 1H as a wet friction material according to the fifth modified example of the first embodiment of the invention, R processing is given to the outer periphery and the inner periphery of segment pieces 3H, 31 which are bounded by a plurality of oil grooves 4A, 4B, as a result, the length of the plurality of the oil grooves 4A, 4B shortens alternately. The length of the oil grooves 4A is less than or equal to two-thirds of the maximum radial length of segment pieces 3H, 31 alternately, while all of the plurality of the oil grooves 4A, 4B are symmetrical shapes. Therefore, the segment-type friction material 1H according to the fifth modified example of the first embodiment of the invention corresponds with the wet friction material according to an invention of claim 1 and claim 2.

Moreover, in the segment-type friction material 1H according to the fifth modified example of the first embodiment of the invention, the length of shortened oil grooves 4A is within a range of 40 % to 67 % of the maximum radial length of segment pieces 3H, 31. Therefore, the segment-type friction material 1H according to the fifth modified example of the first embodiment of the invention also corresponds with the wet friction material according to an invention of claim 5.

Furthermore, in the segment-type friction material 1H according to the fifth modified example of the first embodiment of the invention, dents 3Ha, 3Ia in the inner peripheral side are given to the inner peripheral center portions of segment pieces 3H, 31. Hereby, in the dents 3Ha, 3Ia, when the lubricating oil is supplied from the inner peripheral side, it can obtain a more significant drag torque reduction effect by greatly increasing a peeling effect that the lubricating oil runs over front surfaces of segment pieces 3H, 31 and goes into between the friction material and a counterpart material. Therefore, the segment-type friction material 1H according to the fifth modified example of the first embodiment of the invention also corresponds with the wet friction material according to an invention of claim 6.

Also, as shown in Fig.2d, a segment-type friction material 1J as a wet friction material according to the sixth modified example of the first embodiment of the invention is made by that a plurality of segment pieces 3J that normal friction material substrates for a wet friction material use are cut off are arranged side-by-side on the front surface of the steel core metal 2 of the flat ring shape at an interval for the oil groove 4D and joined it with an adhesive (thermosetting resin) in total twenty, and similarly the rear side of the core metal 2 is also joined with an adhesive.

At this point, R processing which is convex to the outer peripheral side is given to an outer periphery of the segment piece 3J symmetrically and R processing which is concave to the inner peripheral side is given to an inner periphery of the segment piece 3J symmetrically. A height (radial width) shortens as it goes to both sides of the segment piece 3J. Moreover, as shown in Fig.2d, a dent 3Ja in an inner peripheral side is given to an inner peripheral center portion of the segment piece 3J.

As a result, the oil groove 4D which is formed in between ones of adjacent segment pieces 3J has a short length, while compared with a maximum height β of the segment piece 3J. A length v (circumferential width) of the segment piece 3J is 24 mm. The height β (maximum radial width) of the segment piece 3J is 9 mm. The length γ of the oil groove 4D is 5 mm. Therefore, the length γ of the oil groove 4D is 55.6 % of the maximum radial width of the segment piece 3J. In addition, the width of the oil groove 4D is 2 mm.

Additionally, as can be seen from Fig.2d in comparison with Fig.1a, the segment piece 3J units symetrical segment pieces 3A, 3B which are shown in Fig.1a by infilling oil grooves 4B. And the segment piece 3J has a shape and a dimension that only inner peripheral side of the oil groove 4B is left as a dent 3Ja, therefore, a width of the dent 3Ja is 2 mm.

That is, in the segment-type friction material 1J as a wet friction material according to the sixth modified example of the first embodiment of the invention, R processing is given to the outer periphery and the inner periphery of the segment piece 3J which is bounded by a plurality of oil grooves 4D, as a result, the length of the plurality of the oil grooves 4D shortens. The length of the oil grooves 4D is less than or equal to two-thirds of the maximum radial length of the segment piece 3J, while all of the plurality of the oil grooves 4D are symmetrical shapes. Therefore, the segment-type friction material 1J according to the sixth modified example of the first embodiment of the invention corresponds with the wet friction material according to an invention of claim 1 and claim 3.

Moreover, in the segment-type friction material 1J according to the sixth modified example of the first embodiment of the invention, the length of shortened oil grooves 4D is within a range of 40 % to 67 % of the maximum radial length of the segment piece 3J. Therefore, the segment-type friction material 1J according to the sixth modified example of the first embodiment of the invention also corresponds with the wet friction material according to an invention of claim 5.

Furthermore, in the segment-type friction material 1J according to the sixth modified example of the first embodiment of the invention, the dent 3Ja in the inner peripheral side is given to the inner peripheral center portion of the segment piece 3J. Hereby, in the dent 3Ja, when the lubricating oil is supplied from the inner peripheral side, it can obtain a more significant drag torque reduction effect by greatly increasing a peeling effect that the lubricating oil runs over the front surface of the segment piece 3J and goes into between the friction material and a counterpart material. Therefore, the segment-type friction material 1J according to the sixth modified example of the first embodiment of the invention also corresponds with the wet friction material according to an invention of claim 6.

In the segment-type friction material according to the first embodiment of the invention mentioned above, it examined a relation between a relative rotating speed and a drag torque by a test regarding the segment-type friction material 1 (first example) according to the first embodiment of the invention, the segment-type friction material 1C (second example) according to the first modified example, the segment-type friction material 1D (third example) according to the second modified example, and the segment-type friction material 11 (comparative example) according to the conventional art.

Test conditions are as follows. A relative rotating speed is 500 rpm to 6500 rpm, an oil temperature of ATF is 40 degrees, an oil amount of ATF is 2000 ml/min (shaft core lubrication), an outer periphery Ø1 that a disc size is shown in Fig.1 is 180 mm and an inner periphery Ø2 is 165 mm. The number of disc plates is three (the number of a counterpart steel disc plates is four accordingly) and a pack clearance is 0.25 mm/ plate. Test results are shown in Fig.3.

As shown in Fig.3, at a time of the relative rotating speed 500 rpm, it already makes a big difference between the first to third examples and the comparative example. The drag torque becomes lower in the segment-type friction materials 1, 1C and 1D according to the first embodiment of the invention (the first to third examples), while compared with the segment-type friction material 11 according to the comparative example. Afterwards, as the relative rotating speed goes up, the drag torque increases in every segment-type friction materials because of the shaft core lubrication, however, differences of the drag torque between the first to third examples and the comparative example become higher and higher.

Among them, a difference of the drag torque between the first example and the comparative example becomes higher progressively as the relative rotating speed goes up. When the relative rotating speed is within a range of 500 rpm to 6500 rpm, which is the test range, the difference of the drag torque between the first example and the comparative example becomes the highest when the relative rotating speed is 6500 rpm.

In the comparative example, the drag torque becomes higher unilaterally as the relative rotating speed goes up, however, in the first example, the drag torque increases linearly when the relative rotating speed is within a range of 500 rpm to 4000 rpm. After that, the drag torque slightly-decreases briefly when the relative rotating speed is 4500 rpm, 5000 rpm. Afterwards, when the relative rotating speed is 5500 rpm, 6000 rpm and 6500 rpm, the drag torque generally continues to be flat.

In contrast, in the second example and the third example, when the relative rotating speed is within a range of 500 rpm to 5000 rpm, the drag torque in the second example is the highest among the first to third examples, however, when the relative rotating speed increases from 5000 rpm to 5500 rpm, the drag torque greatly increases in the third example, and ultimately the drag torque in the third example becomes the highest among the first to third examples.

And as shown in Fig.3, approximately for all ranges of the tested relative rotating speed of 500 rpm to 6500 rpm, it found that the drag torque is lower in the segment-type friction material 1 according to the first example, while compared with segment-type friction materials 1C, 1D according to the second example and the third example. Therefore, the segment-type friction material 1 has a more significant drag torque reduction effect even in segment-type friction materials 1, 1C, 1D according to the first embodiment of the invention.

Then regarding the range of the tested relative rotating speed of 500 rpm to 6500 rpm, a reduction efficacy of the drag torque in segment-type friction materials 1, 1C, 1D according to the first to third examples compared with the segment-type friction material 11 according to the comparative example is calculated based on average value of the following tested relative rotating speed of 500 rpm, 1000 rpm, 2000 rpm, 3000 rpm, 4000 rpm, 4500 rpm, 5000 rpm, 5500 rpm, 6000 rpm and 6500 rpm each.

As a result, as shown in Fig.4, the first example has the highest drag torque reduction effect, followed by the third example and the second example, in that order.

From the test results, it would appear that it is preferable that R processing is given to the inner peripheral side of segment pieces 3A, 3B, 3D and 3E so as to be concave to the inner periphery as segment-type friction materials 1, 1D according to the first example and the third example, and yet R processing is given so that ATF which is supplied from the inner periphery is led to short oil grooves 4A, 4D rather than giving chamfering processing to the inner peripheral side of the segment piece 3C symmetrically as the segment-type friction material 1C according to the second example.

Accordingly, it is proved that segment-type friction materials 1, 1C and 1D according to the first embodiment of the invention (the first to third examples) have a more significant drag torque reduction effect, while compared with the segment-type friction material 11 (comparative example) according to the conventional art.

A mechanism of the drag torque reduction in segment-type friction materials 1, 1C and 1D according to the first embodiment of the invention (the first to third examples) when the lubricating oil is supplied from the inner peripheral side of the wet friction material is described referring to Fig.5.

As shown in Fig.5a, in the segment-type friction material 11 as a wet friction material (comparative example) according to the conventional art, there has a peeling effect between the friction material and a counterpart material by that ATF runs over front surfaces of segment pieces 13A, 13B caused by the chamfering 13a given to inner peripheral corner portions of segment pieces 13A, 13B, however, the stirred torque resulting from forming oil retained by ATF remaining at the outer peripheral portion is high, therefore, the drag torque becomes high.

In contrast, as shown in Fig.5b, in the segment-type friction material 1 as a wet friction material (first example) according to the first embodiment of the invention, it promotes ATF to discharge into outside a diameter and enhances the cavitation by giving R processing to the inner periphery and the outer periphery of segment pieces 3A, 3B so as to shorten the oil groove 4A. And yet, a space in the outer peripheral side is secured by giving R processing to the outer periphery of segment pieces 3A, 3B, and it can restrain the stirred torque resulting from forming oil retained by ATF.

Moreover, as shown in Fig.5b, R processing is given to the inner periphery of segment pieces 3A, 3B so that ATF is led to short oil grooves 4A and it promotes ATF to discharge into outside the diameter. And yet, it can prove effective into a peeling effect between the friction material and a counterpart material by that ATF runs over from R processing portions to front surfaces of segment pieces 3A, 3B.

Furthermore, in case of the specification that there is no ATF supply from the inner peripheral side, ATF which is supplied from the outer peripheral side is promptly discharged into the inner peripheral side through short oil grooves 4A. And yet, it can obtain a significant drag torque reduction effect by a peeling effect that ATF runs from the portion where R processing is given to the outer peripheral side to front surfaces of segment pieces 3A, 3B and goes into the friction material and a counterpart material. Moreover, the space for ATF to run through the outer periphery is sufficiently secured, therefore, it can certainly prevent the drag torque from increasing by generating oil retained at the outer periphery caused by ATF which is supplied from the outer peripheral side.

Accordingly, in segment-type friction materials 1, 1C, 1D, 1F, 1G, 1H and 1J as a wet friction material according to the first embodiment of the invention, it can certainly obtain a more significant drag torque reduction effect by making it easy to discharge the lubricating oil (ATF) which is supplied from the inner peripheral side of the core metal 2 into the outer peripheral side and by preventing the stirred torque from increasing caused by generating oil retained at the outer periphery. And moreover, it can obtain a more significant drag torque reduction effect even in case of the specification that there is no lubricating oil supply form the inner peripheral side.

### SECOND EMBODIMENT

Next, a wet friction material according to a second embodiment of the invention is described referring to Fig.6 and Fig.7. Fig.6a is a plan view showing a part of a wet friction material according to a second embodiment of the invention. Fig.6b is a partial sectional view showing a vertical section of the wet friction material according to the second embodiment of the invention. Fig.6c is a plan view showing a part of a wet friction material according to a first modified example of the second embodiment of the invention. Fig.6d is a plan view showing a part of a wet friction material according to a second modified example of the second embodiment of the invention.

Fig.7a is a plan view showing a part of a wet friction material according to a third modified example of the second embodiment of the invention. Fig.7b is a plan view showing a part of a wet friction material according to a forth modified example of the second embodiment of the invention. Fig.7c is a plan view showing a part of a wet friction material according to a fifth modified example of the second embodiment of the invention. Fig.7d is a plan view showing a part of a wet friction material according to a sixth modified example of the second embodiment of the invention.

As shown in Fig.6a, 6b, a wet friction material 6 according to the second embodiment of the invention differs from the first embodiment (segment-type friction material). And there is provided a ring-type friction material made by joining ring-shaped friction material substrates 7 that normal friction material substrates for a wet friction material use are cut off onto both surfaces of the steel core metal 2 of the flat ring shape along the entire circumference thereof with an adhesive (thermosetting resin) and pressing both the surfaces so as to form a plurality of oil grooves 9A, 9B (one side total forty), while placing island shaped portions 8A, 8B in between.

At this point, R processing which is convex to the outer peripheral side is given to an outer periphery of the island shaped portion 8A and R processing which is concave to the inner peripheral side is given to an inner periphery of the island shaped portion 8A. A height (radial width of the ring-type friction material 6) shortens as it goes to a right side of the island shaped portion 8A. On the other hand, R processing which is convex to the outer peripheral side is also given to an outer periphery of the island shaped portion 8B and R processing which is concave to the inner peripheral side is also given to an inner periphery of the island shaped portion 8B. The height (radial width of the ring-type friction material 6) shortens as it goes to a left side of the island shaped portion 8B.

As a result, the oil groove 9A which is formed in between a right edge of the island shaped portion 8A and a left edge of the island shaped portion 8B has a short length, while compared with the oil groove 4B which is formed in between a left edge of the island shaped portion 8A and a right edge of the island shaped portion 8B. A length X (circumferential width) of island shaped portions 8A, 8B is 11 mm. A height Y (maximum radial width) of island shaped portions 8A, 8B is 9 mm. A length Z of the oil groove 9A is 5 mm. Therefore, the length Z of the oil groove 9A is 55.6 % of the maximum radial length Y of island shaped portions 8A, 8B. In addition, each width of oil grooves 9A, 9B is 2 mm.

That is, in the ring-type friction material 6 as a wet friction material according to the second embodiment of the invention, R processing is given to the outer periphery and the inner periphery of island shaped portions 8A, 8B which are bounded by a plurality of oil grooves 9A, 9B, as a result, the length of the plurality of the oil grooves 9A, 9B shortens alternately. The length of the oil grooves 9A is less than or equal to two-thirds of the maximum radial length of island shaped portions 8A, 8B alternately, while all of the plurality of the oil grooves 9A, 9B are symmetrical shapes. Therefore, the ring-type friction material 6 according to the second embodiment of the invention corresponds with the wet friction material according to an invention of claim 1 and claim 2.

Moreover, in the ring-type friction material 6 according to the second embodiment of the invention, the length of shortened oil grooves 9A is within a range of 40 % to 67 % of the maximum radial length of island shaped portions 8A, 8B. Therefore, the ring-type friction material 6 according to the second embodiment of the invention also corresponds with the wet friction material according to an invention of claim 5.

Also, as shown in Fig.6c, a ring-type friction material 6C as a wet friction material according to the first modified example of the second embodiment of the invention is made by joining ring-shaped friction material substrates 7 that normal friction material substrates for a wet friction material use are cut off onto both surfaces of the steel core metal 2 of the flat ring shape along the entire circumference thereof with an adhesive (thermosetting resin) and pressing both the surfaces so as to form a plurality of oil grooves 9C (one side total forty), while placing an island shaped portion 8C in between.

At this point, chamfering processing which is convex to the outer peripheral side, and yet which is symmetrical centering on the outer peripheral center portion, is given to an outer periphery of the island shaped portion 8C. Also, chamfering processing which is convex to the inner peripheral side, and yet which is symmetrical centering on the inner peripheral center portion, is given to an inner periphery of the island shaped portion 8C. A height (radial width of the ring-type friction material 6C) shortens as it goes to both sides of the island shaped portion 8C.

As a result, the oil groove 9C which is formed in between ones of island shaped portions 8C has a short length. A length X (circumferential width) of the island shaped portion 8C is 11 mm. A height Y (maximum radial width) of the island shaped portion 8C is 9 mm. A length W of the oil groove 9C is 6 mm. Therefore, the length W of the oil groove 9C is 66.7 % of the maximum radial length Y of the island shaped portion 8C. In addition, a width of the oil groove 9C is 2 mm.

That is, in the ring-type friction material 6C as a wet friction material according to the first modified example of the second embodiment of the invention, chamfering processing is given to the outer periphery and the inner periphery of the island shaped portion 8C which is bounded by a plurality of oil grooves 9C, as a result, all the length of the plurality of the oil grooves 9C shortens. The length of the oil grooves 9C is less than or equal to two-thirds of the maximum radial length of the island shaped portion 8C, while all of the plurality of the oil grooves 9C are symmetrical shapes. Therefore, the ring-type friction material 6C according to the first modified example of the second embodiment of the invention corresponds with the wet friction material according to an invention of claim 1 and claim3.

Moreover, in the ring-type friction material 6C according to the first modified example of the second embodiment of the invention, the length of shortened oil grooves 9C is within a range of 40 % to 67 % of the maximum radial length of the island shaped portion 8C. Therefore, the ring-type friction material 6C according to the first modified example of the second embodiment of the invention also corresponds with the wet friction material according to an invention of claim 5.

Furthermore, as shown in Fig.6d, a ring-type friction material 6D as a wet friction material according to the second modified example of the second embodiment of the invention is made by joining ring-shaped friction material substrates 7 that normal friction material substrates for a wet friction material use are cut off onto both surfaces of the steel core metal 2 of the flat ring shape along the entire circumference thereof with an adhesive (thermosetting resin) and pressing both the surfaces so as to form a plurality of oil grooves 9D, 9E (one side total forty), while placing island shaped portions 9D, 9E in between.

At this point, R processing which is convex to the outer peripheral side is given to an outer periphery of the island shaped portion 8D and R processing which is concave to the inner peripheral side is given to an inner periphery of the island shaped portion 8D. Moreover, chamfering processing is given to an inner peripheral right corner portion of the island shaped portion 8D. A height (radial width of the ring-type friction material 6D) shortens as it goes to a left side of the island shaped portion 8D. On the other hand, R processing which is convex to the outer peripheral side is also given to an outer periphery of the island shaped portion 8E and R processing which is concave to the inner peripheral side is also given to an inner periphery of the island shaped portion 8E. Moreover, chamfering processing is given to an inner peripheral left corner portion of the island shaped portion 8E. The height (radial width of the ring-type friction material 6D) shortens as it goes to a right side of the island shaped portion 8E.

As a result, the oil groove 9D which is formed in between a left edge of the island shaped portion 8D and a right edge of the island shaped portion 8E has a short length, while compared with the oil groove 9E which is formed in between a right edge of the island shaped portion 8D and a left edge of the island shaped portion 8E. A length X (circumferential width) of island shaped portions 8D, 8E is 11 mm. A height Y (maximum radial width) of island shaped portions 8D, 8E is 9 mm. A length Z of the oil groove 9D is 5 mm. Therefore, the length Z of the oil groove 9D is 55.6 % of the maximum radial length Y of island shaped portions 8D, 8E. In addition, each width of oil grooves 9D, 9E is 2 mm.

That is, in the ring-type friction material 6D as a wet friction material according to the second modified example of the second embodiment of the invention, R processing and chamfering processing are given to the outer periphery and the inner periphery of island shaped portions 8D, 8E which are bounded by a plurality of oil grooves 9D, 9E, as a result, the length of the plurality of the oil grooves 9D, 9E shortens alternately. The length of the oil grooves 9D is less than or equal to two-thirds of the maximum radial length of island shaped portions 8D, 8E alternately, while all of the plurality of the oil grooves 9D, 9E are symmetrical shapes. Therefore, the ring-type friction material 6D according to the second modified example of the second embodiment of the invention corresponds with the wet friction material according to an invention of claim 1 and claim2.

Moreover, in the ring-type friction material 6D according to the second modified example of the second embodiment of the invention, the length of shortened oil grooves 9D is within a range of 40 % to 67 % of the maximum radial length of island shaped portions 8D, 8E. Therefore, the ring-type friction material 6D according to the second modified example of the second embodiment of the invention also corresponds with the wet friction material according to an invention of claim 5.

Also, as shown in Fig.7a, a ring-type friction material 6F as a wet friction material according to the third modified example of the second embodiment of the invention is made by joining ring-shaped friction material substrates 7 that normal friction material substrates for a wet friction material use are cut off onto both surfaces of the steel core metal 2 of the flat ring shape along the entire circumference thereof with an adhesive (thermosetting resin) and pressing both the surfaces so as to form a plurality of oil grooves 9F (one side total forty), while placing an island shaped portion 8A in between.

At this point, R processing which is convex to the outer peripheral side is given to the outer periphery of the island shaped portion 8A and R processing which is concave to the inner peripheral side is given to the inner periphery of the island shaped portion 8A. A height (radial width) shortens as it goes to the right side of the island shaped portion 8A. Here, "length of an oil groove" means the length of a shorter one in end sections of adjacent island shaped portions as described above, therefore, the length of the oil groove 9F is Z.

Accordingly, the length X (circumferential width) of the island shaped portion 8A is 11 mm. The height Y (maximum radial width) of the island shaped portion 8A is 9 mm. The length Z of the oil groove 9F is 5 mm. Therefore, the length Z of the oil groove 9F is 55.6 % of the maximum radial length Y of the island shaped portion 8A. In addition, a width of the oil groove 9F is 2 mm.

That is, in the ring-type friction material 6F as a wet friction material according to the third modified example of the second embodiment of the invention, R processing and chamfering processing are given to the outer periphery and the inner periphery of the island shaped portion 8A which is bounded by a plurality of oil grooves 9F, as a result, shapes of the island shaped portions 8A become all the same. All the length of the plurality of the oil grooves 9F is less than or equal to two-thirds of the maximum radial length Y of the island shaped portion 8A, while all of the plurality of the oil grooves 9F are asymmetrical shapes. Therefore, the segment-type friction material 6F according to the third modified example of the second embodiment of the invention corresponds with the wet friction material according to an invention of claim 1 and claim 4.

Moreover, in the ring-type friction material 6F according to the third modified example of the second embodiment of the invention, the length of short oil grooves 9F is within a range of 40 % to 67 % of the maximum radial length of the island shaped portion 8A. Therefore, the ring-type friction material 6F according to the third modified example of the second embodiment of the invention also corresponds with the wet friction material according to an invention of claim 5.

Also, as shown in Fig.7b, a ring-type friction material 6G as a wet friction material according to the forth modified example of the second embodiment of the invention is made by joining ring-shaped friction material substrates 7 that normal friction material substrates for a wet friction material use are cut off onto both surfaces of the steel core metal 2 of the flat ring shape along the entire circumference thereof with an adhesive (thermosetting resin) and pressing both the surfaces so as to form a plurality of oil grooves 9G, 9H (one side total forty), while placing island shaped portions 8F, 8G in between.

Also, small R processing is given to right and left corner portions of an inner periphery of the island shaped portion 8F and chamfering processing 8Fa is given to an outer peripheral right corner portion of the island shaped portion 8F. Symmetrically to this, small R processing is given to right and left corner portions of an inner periphery of the island shaped portion 8G and chamfering processing 8Ga is given to an outer peripheral left corner portion of the island shaped portion 8G.

As a result, the oil groove 9G which is formed in between the island shaped portion 8F and the island shaped portion 8G has a short length. On the other hand, the oil groove 9H which is formed in between the island shaped portion 8G and the island shaped portion 8F has an almost same length, while compared with a height Y of island shaped portions 8F, 8G. A length X (circumferential width) of island shaped portions 8F, 8G is 11 mm. The height Y (maximum radial width) of island shaped portions 8F, 8G is 9 mm. A length U of the oil groove 9G is 6 mm. Therefore, the length U of the oil groove 9G is 66.7 % of the maximum radial length Y of island shaped portions 8F, 8G. In addition, each width of oil grooves 9G, 9H is 2 mm.

That is, in the ring-type friction material 6G as a wet friction material according to the forth modified example of the second embodiment of the invention, chamfering processing is given to one of outer periphery of island shaped portions 8F, 8G which are bounded by a plurality of oil grooves 9G, 9H, as a result, the length of the plurality of the oil grooves shortens alternately. The length of the oil grooves 9G is less than or equal to two-thirds of the maximum radial length of island shaped portions 8F, 8G alternately, while all of the plurality of the oil grooves 9G, 9H are symmetrical shapes. Therefore, the ring-type friction material 6G according to the forth modified example of the second embodiment of the invention corresponds with the wet friction material according to an invention of claim 1 and claim2.

Moreover, in the ring-type friction material 6G according to the forth modified example of the second embodiment of the invention, the length of shortened oil grooves 9G is within a range of 40 % to 67 % of the maximum radial length of island shaped portions 8F, 8G. Therefore, the ring-type friction material 6G according to the forth modified example of the second embodiment of the invention also corresponds with the wet friction material according to an invention of claim 5.

Also, as shown in Fig.7c, a ring-type friction material 6H as a wet friction material according to the fifth modified example of the second embodiment of the invention is made by joining ring-shaped friction material substrates 7 that normal friction material substrates for a wet friction material use are cut off onto both surfaces of the steel core metal 2 of the flat ring shape along the entire circumference thereof with an adhesive (thermosetting resin) and pressing both the surfaces so as to form a plurality of oil grooves 9A, 9B (one side total forty), while placing island shaped portions 8H, 81 in between.

At this point, R processing which is convex to the outer peripheral side is given to an outer periphery of the island shaped portion 8H and R processing which is concave to the inner peripheral side is given to an inner periphery of the island shaped portion 8H. A height (radial width) shortens as it goes to a right side of the island shaped portion 8H. On the other hand, R processing which is convex to the outer peripheral side is also given to an outer periphery of the island shaped portion 81 and R processing which is concave to the inner peripheral side is also given to an inner periphery of the island shaped portion 81. The height (radial width) shortens as it goes to a left side of the island shaped portion 81. Moreover, as shown in Fig.7c, dents 8Ha, 8Ia in an inner peripheral side are given to inner peripheral center portions of island shaped portions 8H, 81.

As a result, the oil groove 9A which is formed in between a right edge of the island shaped portion 8H and a left edge of the island shaped portion 81 has a short length, while compared with the oil groove 9B which is formed in between a left edge of the island shaped portion 8H and a right edge of the island shaped portion 81. A length X (circumferential width) of island shaped portions 8H, 81 is 11 mm. A height Y (maximum radial width) of island shaped portions 8H, 81 is 9 mm. The length Z of the oil groove 9A is 5 mm. Therefore, the length Z of the oil groove 9A is 55.6 % of the maximum radial length Y of island shaped portions 8H, 81. In addition, each width of oil grooves 9A, 9B is 2 mm.

That is, in the ring-type friction material 6H as a wet friction material according to the fifth modified example of the second embodiment of the invention, R processing is given to the outer periphery and the inner periphery of island shaped portions 8H, 81 which are bounded by a plurality of oil grooves 9A, 9B, as a result, the length of the plurality of the oil grooves 9A, 9B shortens alternately. The length of the oil grooves 9A is less than or equal to two-thirds of the maximum radial length of island shaped portions 8H, 81 alternately, while all of the plurality of the oil grooves 9A, 9B are symmetrical shapes. Therefore, the ring-type friction material 6H according to the fifth modified example of the second embodiment of the invention corresponds with the wet friction material according to an invention of claim 1 and claim 2.

Moreover, in the ring-type friction material 6H according to the fifth modified example of the second embodiment of the invention, the length of shortened oil grooves 9A is within a range of 40 % to 67 % of the maximum radial length of island shaped portions 8H, 81. Therefore, the ring-type friction material 6H according to the fifth modified example of the second embodiment of the invention also corresponds with the wet friction material according to an invention of claim 5.

Furthermore, in the ring-type friction material 6H according to the fifth modified example of the second embodiment of the invention, dents 8Ha, 8Ia in the inner peripheral side are given to inner peripheral center portions of island shaped portions 8H, 81. Hereby, when the lubricating oil is supplied from the inner peripheral side, in the dents 8Ha, 8Ia, it can obtain a more significant drag torque reduction effect by greatly increasing a peeling effect that the lubricating oil runs over front surfaces of island shaped portions 8H, 81 and goes into between the friction material and a counterpart material. Therefore, the ring-type friction material 6H according to the fifth modified example of the second embodiment of the invention also corresponds with the wet friction material according to an invention of claim 6.

Additionally, as shown in Fig.7d, a ring-type friction material 6J as a wet friction material according to the sixth modified example of the second embodiment of the invention is made by joining ring-shaped friction material substrates 7 that normal friction material substrates for a wet friction material use are cut off onto both surfaces of the steel core metal 2 of the flat ring shape along the entire circumference thereof with an adhesive (thermosetting resin) and pressing both the surfaces so as to form a plurality of oil grooves 9D (one side total twenty), while placing an island shaped portions 8J in between.

At this point, R processing which is convex to the outer peripheral side is given to an outer periphery of the island shaped portion 8J symmetrically and R processing which is concave to the inner peripheral side is given to an inner periphery of the island shaped portion 8J symmetrically. A height (radial width) shortens as it goes to both sides of the island shaped portion 8J. Moreover, as shown in Fig.7d, a dent 8Ja in an inner peripheral side is given to an inner peripheral center portion of the island shaped portion 8J.

As a result, the oil groove 9D which is formed in between adjacent island shaped portions 8J has a short length, while compared with a maximum height Y of the island shaped portion 8J. A length V (circumferential width) of the island shaped portion 8J is 24 mm. The height Y (maximum radial width) of the island shaped portion 8J is 9 mm. The length Z of the oil groove 9D is 5 mm. Therefore, the length Z of the oil groove 9D is 55.6 % of the maximum radial length Y of the island shaped portion 8J. In addition, the width of the oil groove 9D is 2 mm.

Also, as can be seen from Fig.7d in comparison with Fig.6a, the island shaped portion 8J has a shape and a dimension, which is left as a dent 8Ja, by pressing only the inner peripheral side of the oil groove 9B when forming the island shaped portion 8J by pressing symmetrical island shaped portions 8A, 8B which are shown in Fig.6a. Therefore, a width of the dent 8Ja is 2 mm.

That is, in the ring-type friction material 6J as a wet friction material according to the sixth modified example of the second embodiment of the invention, R processing is given to the outer periphery and the inner periphery of the island shaped portion 8J which is bounded by a plurality of oil grooves 9D, as a result, the length of the plurality of the oil grooves 9D shortens. The length of the oil grooves 9D is less than or equal to two-thirds of the maximum radial length of the island shaped portion 8J, while all of the plurality of the oil grooves 9D are symmetrical shapes. Therefore, the ring-type friction material 6J according to the sixth modified example of the second embodiment of the invention corresponds with the wet friction material according to an invention of claim 1 and claim 3.

Moreover, in the ring-type friction material 6J according to the sixth modified example of the second embodiment of the invention, the length of shortened oil grooves 9D is within a range of 40 % to 67 % of the maximum radial length of the island shaped portion 8J. Therefore, the ring-type friction material 6J according to the sixth modified example of the second embodiment of the invention also corresponds with the wet friction material according to an invention of claim 5.

Furthermore, in the ring-type friction material 6J according to the sixth modified example of the second embodiment of the invention, the dent 8Ja in the inner peripheral side is given to the inner peripheral center portion of the island shaped portion 8J. Hereby, when the lubricating oil is supplied from the inner peripheral side, in the dent 8Ja, it can obtain a more significant drag torque reduction effect by greatly increasing a peeling effect that the lubricating oil runs over a front surface of the island shaped portion 8J and goes into the friction material and a counterpart material. Therefore, the ring-type friction material 6J according to the sixth modified example of the second embodiment of the invention also corresponds with the wet friction material according to an invention of claim 6.

Accordingly, when ring-type friction materials 6, 6C, 6D, 6F, 6G, 6H and 6J according to the second embodiment of the invention are assembled into AT, it promotes ATF to discharge into outside the diameter and enhances the cavitation by giving R processing to the inner periphery and the outer periphery of island shaped portions 8A, 8B, 8C, 8D, 8E, 8F, 8G, 8H, 8I and 8J so as to shorten oil grooves 9A, 9C, 9D, 9F, 9G and 9H. And yet, it can restrain the stirred torque resulting from forming oil retained by ATF caused by that the space in the outer peripheral side is secured by giving R processing or chamfering processing to the outer periphery of island shaped portions 8A, 8B, 8C, 8D, 8E, 8F, 8G, 8H, 81 and 8J.

Moreover, ATF is led to short oil grooves 9A, 9C, 9D, 9F, 9G and 9H and it promotes ATF to discharge into outside the diameter by giving R processing and/or chamfering processing to the inner periphery of island shaped portions 8A, 8B, 8C, 8D, 8E, 8F, 8G, 8H, 81 and 8J. And yet, it can prove effective into a peeling effect between the friction material and a counterpart material by that ATF runs from the R processing portion or the chamfering processing portion on to front surfaces of island shaped portions 8A, 8B, 8C, 8D, 8E, 8F, 8G, 8H, 8I and 8J also.

Furthermore, in case of the specification that there is no ATF supply from the inner peripheral side, ATF which is supplied from the outer peripheral side is discharged promptly into the inner peripheral side through short oil grooves 9A, 9C, 9D, 9F, 9G and 9H. And yet, it can obtain a significant drag torque reduction effect by a peeling effect that ATF runs from the portion where R processing or chamfering processing is given to the outer peripheral side to front surfaces of island shaped portions 8A, 8B, 8C, 8D, 8E, 8F, 8G, 8H, 8I and 8J and goes into the friction material and a counterpart material. Moreover, the space for the lubricating oil to run through the outer periphery is sufficiently secured, therefore, it can certainly prevent the drag torque from increasing by generating oil retained at the outer periphery caused by ATF which is supplied from the outer peripheral side.

Accordingly, in ring-type friction materials 6, 6C, 6D, 6F, 6G, 6H and 6J as a wet friction material according to the second embodiment of the invention, by making it easy to discharge the lubricating oil (ATF) which is supplied from the inner peripheral side of the core metal 2 into the outer peripheral side and by preventing the stirred torque from increasing by generating oil retained at the outer periphery, it can certainly obtain a more significant drag torque reduction effect. And moreover, it can also obtain a more significant drag torque reduction effect even in case of the specification that there is no lubricating oil supply from the inner peripheral side.

Moreover, ring-type friction materials 6, 6C, 6D, 6F, 6G, 6H and 6J as a press-type friction material according to the second embodiment of the invention are made by joining ring-shaped friction material substrates 7 onto both surfaces of the core metal 2 of the flat ring shape along the entire circumference with an adhesive (thermosetting resin) and pressing both the surfaces. Therefore, there is an advantage that the production is much easier and the cost reduction is enhanced much more.

In the above each embodiment, in wet friction materials, only press-type friction materials comprising the segment-type friction material and the ring-type friction material are described, however, even in a cut-type friction material of a ring type which is formed by cutting similar oil grooves, it can obtain an equivalent drag torque reduction effect as ring-type (press-type) friction materials 6, 6C, 6D, 6F, 6G, 6H and 6J.

Moreover, in the above each embodiment, as shown in Fig.1, Fig.2, Fig.5, Fig.6 and Fig.7, wet friction materials joined segment pieces 3A, 3B, 3C, 3D, 3E, 3F, 3G, 3H, 3I and 3J or ring-shaped friction material substrates 7 onto only the portion where is inclined toward the outer peripheral side of the core metal 2 are descried, however, as described in the above Japanese Laid Open Patent Publication No. 2001-295859, No. 2005-069411 and No. 2005-282648, it can obtain an equivalent drag torque reduction effect as the above each embodiment even when segment pieces or ring-shaped friction material substrates are joined in width of over 90 % of a width from the outer periphery to the inner periphery of the core metal 2.

In addition, even when segment pieces or ring-shaped friction material substrates are joined in width of a certain percent of the width from the outer periphery to the inner periphery of the core metal 2, it can also obtain a equivalent drag torque reduction effect as the above each embodiment. Moreover, in the above each embodiment, only a case that segment pieces or ring-shaped friction material substrates are joined onto both surfaces of the core metal 2 is described, however, depending on the specification, it can join segment pieces or ring-shaped friction material substrates onto only one side of the core metal 2.

Furthermore, in the above each embodiment, only a case that it joins forty or twenty set of segment pieces onto one surface of the core metal 2 or a case that it joins ring-shaped friction material substrates so as to form forty or twenty set of oil grooves are described, however, the number of segment pieces per one surface of the core metal 2 is not limited to forty and the number of oil grooves is not limited to forty also. It can set any numbers freely.

In the practice of this invention, it is not limited to each embodiment mentioned above regarding a structure, a shape, a quantity, a material, a dimension, a connecting relation, a production method or the like of other portions of the wet friction material (segment-type friction material and ring-type friction material). Also, the numeric value which is described in the embodiment of this invention is not anything to indicate a critical value, but to indicate the preferred value that is suitable for enforcement. Therefore, it is not anything to deny the enforcement even if the above numeric value is changed a little.

In a wet friction material, to be able to obtain a more significant drag torque reduction effect certainly by making it easy to discharge a lubricating oil which is supplied from an inner peripheral side of a core metal into an outer peripheral side and by preventing a stirred torque from increasing by generating oil retained at an outer periphery, and moreover to be able to obtain a more significant drag torque reduction effect even in case of a specification that there is no lubricating oil supply from the inner peripheral side.
In a segment-type friction material 1, it promotes ATF to discharge into outside a diameter and enhances a cavitation by giving R processing to an inner periphery and an outer periphery of segment pieces 3A, 3B so as to shorten an oil groove 4A, and yet it can restrain a stirred torque resulting from forming oil retained by ATF caused by that a space in the outer peripheral side is secured by giving R processing to the outer periphery of segment pieces 3A, 3B.

## Claims

1. A wet friction material **characterized in that:**
a segment-type friction material made by joining friction material substrates cut into a segment piece along the above flat ring shape onto one or both surfaces of a core metal of a flat ring shape with an adhesive along an entire circumference of the core metal so as to form a plurality of oil grooves extending in a radial direction of the core metal by a clearance between ones of adjacent segment pieces mentioned above; otherwise
a ring-type friction material made by pressing or cutting ring-shaped friction material substrates joined onto one or both surfaces of a core metal of a flat ring shape with an adhesive so as to form a plurality of oil grooves extending in a radial direction of the core metal, while leaving an island shaped portion; and
R processing and/or chamfering processing is given only to an outer periphery or to the outer periphery and an inner periphery of the above island shaped portion or the above segment piece which is bounded by the above plurality of the oil grooves, as a result, a length of substantial oil grooves which give a passage when a lubricating oil is discharged is shortened at least every one of the above plurality of the oil grooves.

2. A wet friction material according to claim 1 **characterized in that:**
the length of substantial oil grooves which give a passage when the lubricating oil is discharged is less than or equal to two-thirds of a maximum radial length of the above segment piece or the above island shaped portion at least every one of the above plurality of the oil grooves, while all of the above plurality of the oil grooves are symmetrical shapes.

3. A wet friction material according to claim 1 **characterized in that:**
all the length of the above plurality of the oil grooves is less than or equal to two-thirds of the maximum radial length of the above segment piece or the above island shaped portion, while all of the above plurality of the oil grooves are symmetrical shapes.

4. A wet friction material according to claim 1 **characterized in that:**
R processing and/or chamfering processing is given only to the outer periphery or to the outer periphery and the inner periphery of the above island shaped portion or the above segment piece which is bounded by the above plurality of the oil grooves asymmetrically, as a result, shapes of the above segment pieces or the above island shaped portions become all the same and all the length of the above plurality of the oil grooves is less than or equal to two-thirds of the maximum radial length of the above segment piece or the above island shaped portion, while all of the above plurality of the oil grooves are asymmetrical shapes.

5. A wet friction material according to one of claims 1 to 4 **characterized in that:**
the length of shortened oil grooves mentioned above is within a range of 40 % to 67 % of the maximum radial length of the above segment piece or the above island shaped portion.

6. A wet friction material according to one of claims 1 to 5 **characterized in that:**
a dent in an inner peripheral side is applied to an inner peripheral center portion of the above island shaped portion or the above segment piece which is bounded by the above plurality of the oil grooves.
